# FASCICULE DE BREVET EUROPEEN

(11) **EP 2 145 755 B1**
(45) Date de publication et mention de la délivrance du brevet: **19.01.2011**
(21) Numéro de dépôt: 09305565.5
(22) Date de dépôt: 18.06.2009
(51) Int. Cl.: B31F 1/00, B31D 5/02, B29C 53/04, B29C 63/04

(54) **Procédé de formage de profilés de section angulaire et dispositif pour la mise en oeuvre de ce procédé**
Verfahren zur Formung von Winkelprofilen und Vorrichtung zur Umsetzung dieses Verfahrens
Method for forming profiles with an angular section and device for implementing this method

(30) Priorité: 18.07.2008 FR 0854895
(43) Date de publication de la demande: 20.01.2010
(73) Titulaire: Eberle (Société par Actions Simplifiées), 67116 Reichstett (FR)
(72) Inventeur: Priester, Claude, 67000 Strasbourg (FR)
(74) Mandataire: Nuss, Pierre

(56) Documents cités:
- EP-A- 1 300 237
- WO-A-2005/077625
- FR-A- 2 688 738

## Description

La présente invention concerne le domaine des machines de transformation de matières flexibles en bande, en particulier en papier, en carton, en matériaux composites ou analogues et notamment sous forme de profilés de section angulaire, et a pour objet un procédé de formage de tels profilés.

L'invention a également pour objet un dispositif pour la mise en oeuvre de ce procédé.

Actuellement, la fabrication de profilés de section angulaire en matière flexible, en particulier en papier, en carton, en matériaux composites ou analogues, est généralement réalisée par déroulement de bandes de ces matériaux de bobines placées sur un dévidoir et par passage des bandes déroulées sur différents rouleaux de renvoi, ces bandes étant guidées afin de se présenter l'une au-dessus de l'autre, en nombre correspondant à l'épaisseur du profilé à obtenir.

Les bandes ainsi disposées sont alors dirigées soit à travers un dispositif de thermoscellage, soit à travers un dispositif d'encollage, où elles sont enduites de colle sur l'une ou les deux faces. Ensuite, ces bandes encollées ou thermoscellées, superposées horizontalement, sont formées progressivement par passage sur des gabarits correspondants d'une machine à préformer pour être introduite dans une machine à former en vue de l'obtention du profilé désiré.

Le déplacement des bandes, et ensuite des profilés, est assuré par une traction sur les profilés, à la sortie de la machine à former, au moyen de deux ou plusieurs trains de diabolos ou rouleaux d'entraînement présentant une forme correspondante. Ensuite, le profilé obtenu s'engage sur un dispositif de coupe à la volée par guillotine, en vue d'un débitage à la longueur. Voir par example FR 2698 738.

Les procédés de fabrication connus présentent, cependant, des inconvénients. En effet, le fait de plier progressivement les bandes ainsi assemblées, lors du préformage, puis leur passage dans la machine à former, créent des tensions à l'endroit du ou des angles, à savoir une compression à l'intérieur et une extension ou traction à l'extérieur de la ou des zones de pliage.

Par ailleurs, du fait du pliage, des tensions longitudinales apparaissent sur les ailes du profilé. Cela est encore plus marqué lorsque l'on utilise des bobines de matières premières dont les rives ou bords sont de longueurs légèrement différentes. De telles bandes vrillent lors de leur déroulement. De ce fait, le collage n'est pas parfait et d'autres défauts apparaissent, tels qu'une variation des angles du profilé, un vrillage ou une formation de flèche des profilés.

Pour obvier à cet inconvénient, il a été proposé une solution consistant en un pliage plus important, de telle manière que les deux ailes adjacentes à un angle, en s'ouvrant, restent à une position stable. Toutefois une telle solution est aléatoire et difficile à mettre en oeuvre. En effet, pour l'obtention d'un angle de 90°, par exemple, il faudra plier les deux ailes à 60° pour les laisser revenir naturellement à 90°. Mais la tolérance angulaire, exigeant actuellement plus ou moins 1 ° ou 2 °, ne peut pas être atteinte.

En outre, la géométrie de l'angle, qui peut être sous forme d'une arête vive ou d'un rayon en son sommet, est difficile à garantir. Enfin, lors de la coupe, la guillotine rompt, à l'endroit de ladite coupe, les tensions dues à la fabrication du profilé. Il en résulte, sur un profilé d'une longueur donnée, un angle d'une ouverture différente entre les deux extrémités du profilé.

Tous ces inconvénients créent des problèmes importants, lors de la mise en oeuvre d'une machine de mise en place automatique de profilés, où les caractéristiques dimensionnelles doivent être tolérancées. Pour parer partiellement à ces problèmes, on peut utiliser deux matrices de forme chauffantes, avec régulation de température. Les tensions dans l'angle du profilé subsistent, cependant, toujours.

La présente invention a pour but de pallier ces inconvénients en proposant un procédé de formage de profilés notamment de section angulaire, en matières flexibles en bande, en particulier en papier, en carton, en matériaux composites ou analogues, permettant la réalisation de profilés de dimensions et de section très précises.

A cet effet, le procédé de formage de profilés notamment de section angulaire, en matières flexibles en bande, en particulier en papier, en carton, en matériaux composites ou analogues, est **caractérisé en ce qu**'il consiste essentiellement, après des opérations préalables de dévidage de bandes de matière flexible guidées horizontalement à travers un dispositif de thermoscellage ou d'encollage enduisant au moins une face des bandes internes et la face interne des bandes externes, d'assemblage de ces bandes encollées en au moins un ruban et de préformage du ruban obtenu en une ébauche de profilé, à réaliser le formage du profilé sur au moins un mandrin de formage fixe, par application sous pression de chacun des côtés de ladite ébauche de profilé sur les faces correspondantes dudit mandrin de formage fixe par l'intermédiaire d'au moins un rouleau réglable angulairement, par face de mandrin.

L'invention a également pour objet un dispositif pour la mise en oeuvre de ce procédé, qui est constitué par au moins un mandrin de formage fixe coopérant, par chacune de ses faces, avec au moins un rouleau réglable angulairement.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective d'un dispositif de formage pour la mise en oeuvre du procédé conforme à l'invention ;
la figure 2 est une vue en élévation frontale du dispositif suivant la figure 1 ;

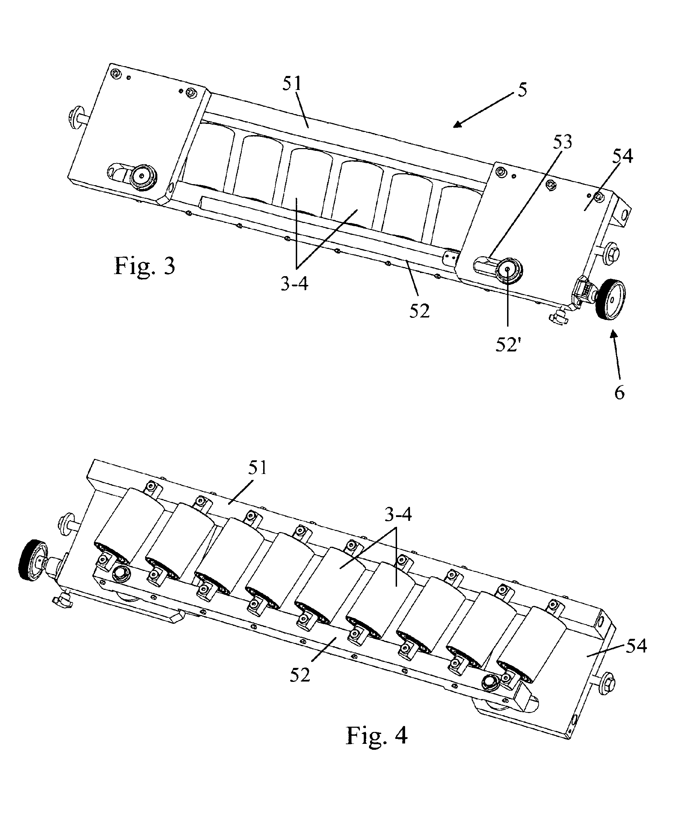

les figures 3 et 4 sont des vues partielles, à plus grande échelle et en perspective, représentant un train de rouleaux presseurs, respectivement par-dessus et par-dessous ;
la figure 5 est une vue en coupe, à plus grande échelle, du moyen de déplacement en translation et du longeron mobile d'articulation de l'extrémité d'un rouleau ou d'un train de rouleaux presseurs ;
les figures 6a à 6e et 7a à 7e sont des vues schématiques, respectivement en élévation latérale et en coupe, représentant différentes variantes de disposition de rouleaux presseurs, et
les figures 8a, 8a' et 8b, 8b' sont des vues schématiques en coupe d'autres variantes de disposition de rouleaux presseurs.

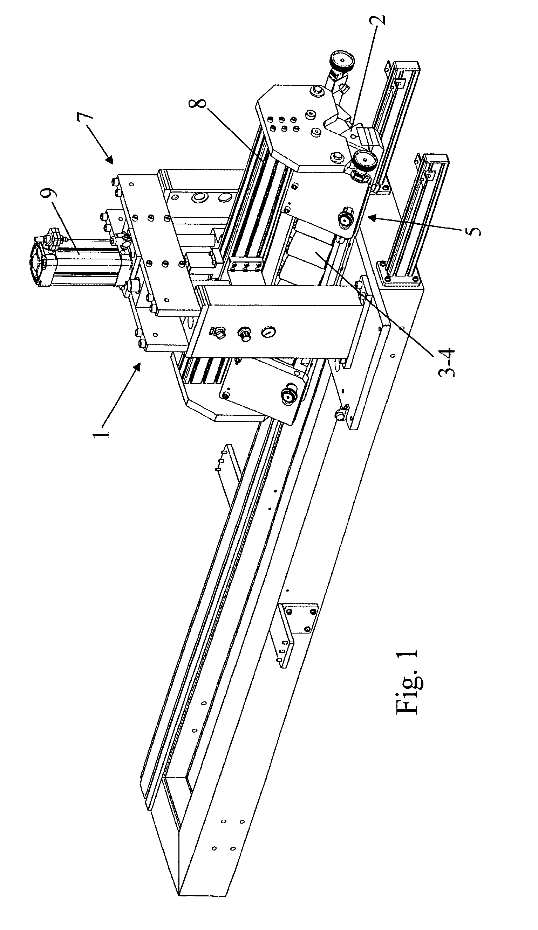

La figure 1 des dessins annexés représente un dispositif de formage 1 d'une machine de formage de profilés, notamment de section angulaire, en matières flexibles en bande, en particulier en papier, en carton, en matériaux composites ou analogues. Une telle machine de formage de profilés comporte, en outre, un ou plusieurs postes de dévidage de bandes de matière flexible qui sont guidées horizontalement à travers un dispositif de thennoscellage ou d'encollage, en vue de l'enduction d'au moins une face des bandes internes et de la face interne des bandes externes, un poste d'assemblage de ces bandes encollées en au moins un ruban et un dispositif de préformage du ruban obtenu en une ébauche de profilé se présentant à l'entrée du dispositif de formage. Pour des raisons de clarté, aucun des moyens en aval du dispositif de formage n'est représenté aux dessins annexés, ceux-ci étant connus.

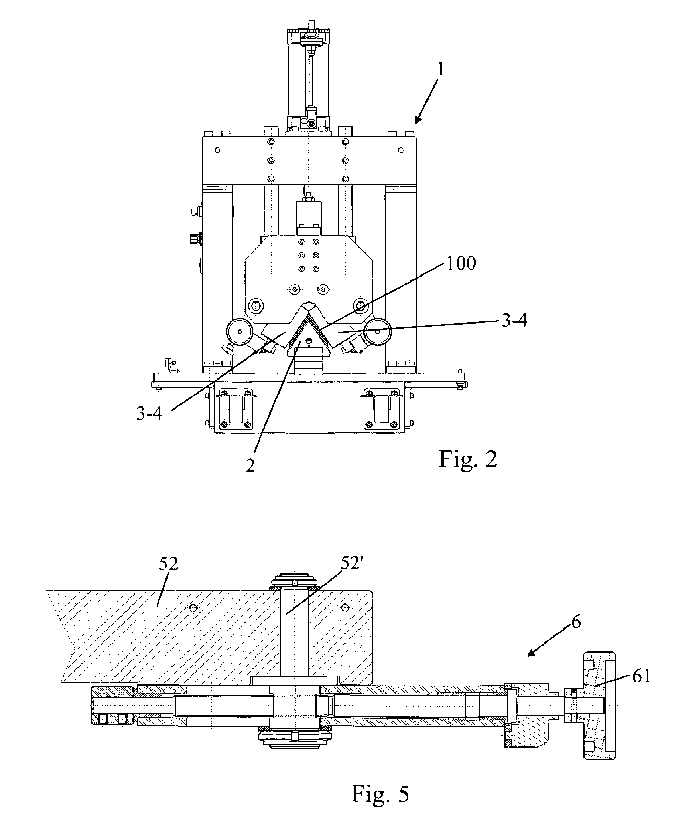

Conformément à l'invention et comme le montrent, à titre d'exemple, les figures 1 et 2 des dessins annexés, le procédé de formage de profilés notamment de section angulaire, en matières flexibles en bande, en particulier en papier, en carton, en matériaux composites ou analogues consiste essentiellement à réaliser le formage du profilé 100 sur au moins un mandrin de formage fixe 2, par application sous pression de chacun des côtés de l'ébauche de profilé sur les faces correspondantes dudit mandrin de formage fixe 2 par l'intermédiaire d'au moins un rouleau réglable angulairement 3, 4, par face de mandrin 2.

Pour la mise en oeuvre de ce procédé, le dispositif de formage 1 de la machine de formage de profilés est constitué par au moins un mandrin de formage fixe 2 qui coopère, par chacune de ses faces, avec au moins un rouleau réglable angulairement 3, 4. Le mandrin de formage fixe 2 peut être un mandrin froid ou chauffant.

De préférence, chaque face du mandrin fixe 2 coopère avec au moins un train de rouleaux 3, 4 réglables angulairement. Ces rouleaux réglable 3, 4 d'un train de rouleaux sont avantageusement montés sur un cadre correspondant 5, dont l'un des longerons 51 est fixe et sert de support de pivotement aux axes à l'une des extrémités des axes des rouleaux 3, 4, l'autre longeron 52 étant mobile, servant de support d'articulation à l'autre extrémité des axes des rouleaux 3, 4 et étant monté de manière déplaçable par rapport au premier longeron 51 en étant guidé près de ses extrémités par l'intermédiaire de rainures curvilignes 53 coopérant avec des guides 52', lesdites rainures étant prévues dans des plaques d'extrémité 54 formant les traverses du cadre 5 et ledit longeron 52 étant relié à un moyen de déplacement en translation 6. Ainsi, par actionnement du moyen de déplacement en translation 6, les rouleaux 3, 4 peuvent être pivotés autour de leur axe d'articulation sur le longeron fixe 51 pour se présenter de manière inclinée par rapport à ce dernier ou encore de manière perpendiculaire au longeron 51.

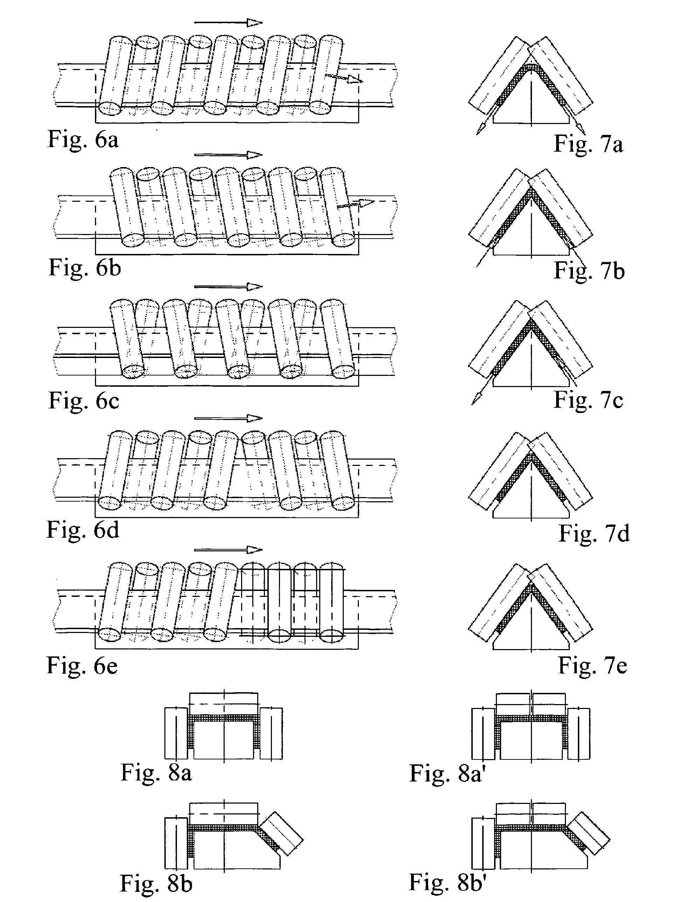

Les figures 6a à 6e représentent ainsi les diverses inclinaisons possibles des rouleaux 3 et 4 par rapport au mandrin fixe 2, par réglage de la position du longeron mobile 52. Il ressort particulièrement de ces figures que les rouleaux 3 et 4 peuvent ainsi être déplacés d'une position (figure 6a), dans laquelle ils ont tendance à tirer les ailes du profilé 100 vers le bas dans une position (figure 6b), dans laquelle ils ont tendance à pousser lesdites ailes vers le haut. Ainsi, dans le premier cas, le profilé obtenu présentera un angle extérieur arrondi, alors que dans le deuxième cas, ledit angle aura une arête vive.

Le moyen de déplacement en translation 6 est avantageusement relié à l'un des guides 52' du longeron mobile 52 et peut être réalisé, par exemple, comme le montre la figure 5 des dessins annexés, sous forme d'un vérin à vis à actionnement par l'intermédiaire d'un bouton moleté 61. Le moyen 6 peut également être constitué par un dispositif électro-mécanique, tel qu'un moto-réducteur relié à un vérin mécanique et dont la commande peut être réalisée par un automate. En outre, les rouleaux réglables angulairement 3 et 4 peuvent présenter une inclinaison identique par rapport au sens de déplacement du profilé 100 ou une inclinaison différente d'un côté du mandrin fixe 2 à l'autre, lesdits rouleaux 3 et 4 étant toujours disposés en quinconce. Ainsi, comme le montrent les figures 6a à 6e des dessins annexés, les rouleaux 3 et 4 appliquent les ailes du profilés 100 sur toute leur hauteur sur le mandrin fixe 2, les rouleaux 3 et 4 étant imbriqués à leur extrémité supérieure.

Par ailleurs, les cadres 5 de support des rouleaux réglables angulairement 3, 4 sont montés sur un dispositif de déplacement vertical 7 comportant essentiellement un châssis 8 de montage desdits cadres 5 et un vérin 9 de déplacement vertical dudit châssis 8 sur le châssis du dispositif de formage 1, en vue de l'application des rouleaux 3 et 4 sur le profilé en formation 100, contre le mandrin fixe 2.

Selon une variante de réalisation de l'invention, non représentée aux dessins annexés, les rouleaux réglables angulairement 3, 4 peuvent également être munis chacun d'un moteur d'entraînement. Ainsi, les efforts de traction ou de poussée sur les ailes du profilés 100 en formation peuvent encore être modulés davantage, chaque rouleau pouvant, le cas échéant, être commandé individuellement. Par ailleurs, la prévision de tel moteur d'entraînement des rouleaux 3, 4 permet également d'assurer simultanément l'entraînement du profilé en formation 100 dans le dispositif de formage et, en aval de celui-ci, jusqu'au poste de débitage des tronçons de profilés.

Le montage des rouleaux conformément à l'invention permet de presser le profilé 100 contre le mandrin fixe 2, par l'intermédiaire desdits rouleaux 3 et 4, de telle manière que les ailes dudit profilé 100 soient tirées vers le bas ou poussées vers le haut, lors de son défilement dans le dispositif de formage 1 (figures 6a, 6b et figures 7a et 7b). L'obtention de ces effets est due à l'angle entre les rouleaux presseurs et au déplacement du profilé 100. Il en résulte l'obtention d'une réaction égale aux tensions occasionnées lors du pliage et donc une neutralisation de ces tensions dans le profilé, de sorte que ce dernier peut être réalisé en présentant une grande stabilité dimensionnelle et de forme.

Il est également possible, selon une variante de réalisation de l'invention, de munir le dispositif de formage 1, sur chaque côté du mandrin fixe 2, de plusieurs trains de rouleaux 3 et 4 réglables angulairement et indépendamment (figures 6d et 7d).

Dans un tel cas, il est possible d'influer pratiquement en continu sur le profilé en formation et, le cas échéant, de corriger un défaut occasionné lors de l'opération de pliage par neutralisation ponctuelle des tensions dans le profilé.

Les figures 8a et 8b, ainsi que 8a' et 8b' représentent des variantes de réalisation du dispositif de fonnage adapté à des profilés présentant plus de deux côtés, à savoir en U (figures 8a, 8a') à ailes ouvertes (figures 8b, 8b'). Dans un tel cas, chaque côté du profilé est soumis à l'action d'au moins un rouleau ou un train de rouleau déplaçable angulairement.

Dans le cas de tels profilés à plus de deux côtés, il est également possible de prévoir, au moins sur le côté formant l'âme du profilé, l'application de deux rouleaux ou deux trains de rouleaux s'appliquant chacun sur une moitié de ladite âme. Une telle réalisation permet, notamment, d'éviter une déformation en vrilles ou autres.

Enfin, selon un autre mode de réalisation de l'invention, représenté plus particulièrement à la figure 6e des dessins annexés, le dispositif de formage 1 peut être pourvu, outre des rouleaux ou trains de rouleaux réglables angulairement 3 et 4, de rouleaux ou trains de rouleaux fixes s'étendant perpendiculairement au sens de défilement du profilé en formation 100. La prévision de tels rouleaux ou trains de rouleaux pennet, notamment, après la réalisation d'un profilé à angle arrondi ou à arête vive, de fixer de manière parfaitement précise et durable la géométrie du profilé.

Selon une autre caractéristique de l'invention, non représentée aux dessins annexés, le dispositif de formage 1 peut être pourvu, en outre, de moyens de détection de la lisière des bords des profilés, ainsi que de la position du ou de ses angles, ces moyens étant combinés à un moyen informatique de contrôle et de commande coopérant avec des dispositifs de commande de l'inclinaison des rouleaux réglables angulairement 3 et 4. Ainsi, il est possible de réaliser en continu et automatiquement, en fonction de données préchargées dans le moyen informatique de contrôle et de commande, un profilé dont toutes les caractéristiques essentielles sont précisément reproduites.

Grâce à l'invention, il est ainsi possible de réaliser tout type de profilé, à ailes égales (figures 7a, 7b, 7d, 7e) ou ailes inégales (figure 7c), ce avec un angle présentant un arrondi prononcé ou peu prononcé ou encore présentant un angle à arête vive. Ainsi, pour la réalisation d'ailes inégales, il suffit d'orienter les trains de rouleaux 3 et 4 suivant des directions différentes par rapport à la direction de progression du profilé 100 et d'agir sur un différentiel d'inclinaison pour obtenir les dimensions recherchées. De même, et comme le montrent les figures 8, les profilés présentant plus de deux côtés sont réalisables de manière identique.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de formage de profilés, notamment de section angulaire, en matières flexibles en bande, en particulier en papier, en carton, en matériaux composites ou analogues, **caractérisé en ce qu'**il consiste essentiellement, après des opérations préalables de dévidage de bandes de matière flexible guidées horizontalement à travers un dispositif de thermoscellage ou d'encollage enduisant au moins une face des bandes internes et la face interne des bandes externes, d'assemblage de ces bandes encollées en au moins un ruban et de préformage du ruban obtenu en une ébauche de profilé, à réaliser le formage du profilé (100) sur au moins un mandrin de formage fixe (2), par application sous pression de chacun des côtés de ladite ébauche de profilé sur les faces correspondantes dudit mandrin de formage (2) fixe par l'intermédiaire d'au moins un rouleau réglable angulairement (3, 4), par face de mandrin.

2. Dispositif de formage (1) pour la mise en oeuvre du procédé suivant la revendication 1, **caractérisé en ce qu'**il est constitué par au moins un mandrin de formage fixe (2) coopérant, par chacune de ses faces, avec au moins un rouleau réglable angulairement (3, 4).

3. Dispositif, suivant la revendication 2, **caractérisé en ce que** chaque face du mandrin fixe (2) coopère avec au moins un train de rouleaux (3, 4) réglables angulairement.

4. Dispositif, suivant la revendication 3, **caractérisé en ce que** les rouleaux réglable (3, 4) d'un train de rouleaux sont montés sur un cadre correspondant (5), dont l'un des longerons (51) est fixe et sert de support de pivotement aux axes à l'une des extrémités des axes des rouleaux (3, 4), l'autre longeron étant mobile (52), servant de support d'articulation à l'autre extrémité des axes des rouleaux (3, 4) et étant monté de manière déplaçable par rapport au premier longeron (51) en étant guidé près de ses extrémités par l'intermédiaire de rainures curvilignes (53) coopérant avec des guides (52'), lesdites rainures étant prévues dans des plaques d'extrémité (54) formant les traverses du cadre (5) et ledit longeron (52) étant relié à un moyen de déplacement en translation (6).

5. Dispositif, suivant la revendication 4, **caractérisé en ce que** le moyen de déplacement en translation (6) est relié à l'un des guides (52') du longeron mobile (52) et peut être réalisé sous forme d'un vérin à vis à actionnement par l'intermédiaire d'un bouton moleté (61).

6. Dispositif, suivant la revendication 4, **caractérisé en ce que** le moyen de déplacement en translation (6) est constitué par un dispositif électro-mécanique, tel qu'un moto-réducteur relié à un vérin mécanique et dont la commande est réalisée par un automate.

7. Dispositif, suivant l'une quelconque des revendications 2 à 4, **caractérisé en ce que** les rouleaux réglables angulairement (3 et 4) ) présentent une inclinaison identique par rapport au sens de déplacement du profilé (100) ou une inclinaison différente d'un côté du mandrin fixe (2) à l'autre, lesdits rouleaux (3 et 4) étant toujours disposés en quinconce.

8. Dispositif, suivant l'une quelconque des revendications 2 à 4 et 7, **caractérisé en ce que** les cadres (5) de support des rouleaux réglables angulairement (3, 4) sont montés sur un dispositif de déplacement vertical (7) comportant essentiellement un châssis (8) de montage desdits cadres (5) et un vérin (9) de déplacement vertical dudit châssis (8) sur le châssis du dispositif de formage (1), en vue de l'application des rouleaux (3 et 4) sur le profilé en formation (100), contre le mandrin fixe (2).

9. Dispositif, suivant l'une quelconque des revendications 2 à 4, 7 et 8, **caractérisé en ce que** les rouleaux réglables angulairement (3, 4) sont munis chacun d'un moteur d'entraînement.

10. Dispositif, suivant l'une quelconque des revendications 2 à 4 et 7 à 9, **caractérisé en ce qu'**il est muni, sur chaque côté du mandrin fixe (2), de plusieurs trains de rouleaux (3 et 4) réglables angulairement et indépendamment.

11. Dispositif, suivant l'une quelconque des revendications 2 à 4 et 7 à 10, **caractérisé en ce que**, dans le cas de profilés à plus de deux côtés, il est pourvu, au moins sur le côté formant l'âme du profilé, de deux rouleaux ou deux trains de rouleaux s'appliquant chacun sur une moitié de ladite âme.

12. Dispositif, suivant l'une quelconque des revendications 2 à 4 et 7 à 11, **caractérisé en ce qu'**il est pourvu, outre des rouleaux ou trains de rouleaux réglables angulairement (3 et 4), de rouleaux ou trains de rouleaux fixes s'étendant perpendiculairement au sens de défilement du profilé en formation (100).

13. Dispositif, suivant l'une quelconque des revendications 2 à 12, **caractérisé en ce qu'**il est pourvu, en outre, de moyens de détection de la lisière des bords des profilés, ainsi que de la position du ou de ses angles, ces moyens étant combinés à un moyen informatique de contrôle et de commande coopérant avec des dispositifs de commande de l'inclinaison des rouleaux réglables angulairement (3 et 4).

## Claims

1. Method for forming profiles, notably of angular section, from flexible material in strip form, particularly paper, card, composite materials or the like, **characterized in that** it consists essentially, following prior operations of paying out strips of flexible material which are guided horizontally through a heat-sealing or adhesive-application device that coats at least one face of the internal strips and the internal face of the external strips with adhesive, in assembling these adhesive-coated strips into at least one band and in pre-forming the band obtained into a rough profile, in forming the profile (100) on at least one fixed forming mandrel (2), by pressing each of the sides of the said rough profile against the corresponding faces of the said fixed forming mandrel (2) using at least one angularly adjustable roll (3, 4) per face of mandrel.

2. Forming device (1) for implementing the method according to Claim 1, **characterized in that** it consists of at least one fixed forming mandrel (2) which, via each of its faces, collaborates with at least one angularly adjustable roll (3, 4).

3. Device according to Claim 2, **characterized in that** each face of the fixed mandrel (2) collaborates with at least one gang of angularly adjustable rolls (3, 4).

4. Device according to Claim 3, **characterized in that** the adjustable rolls (3, 4) of one gang of rolls are mounted on a corresponding frame (5) of which one of the longitudinal members (51) is fixed and serves as a pivot support for the axles at one of the ends of the axles of the rolls (3, 4), the other longitudinal member (52) being mobile and acting as an articulation support for the other end of the axles of the rolls (3, 4), and being mounted such that it can be moved in relation to the first longitudinal member (51), being guided near its ends by curved slots (53) that collaborate with guides (52'), the said slots being provided in end plates (54) that form the crossmembers of the frame (5), and the said longitudinal member (52) being connected to a means (6) of translational movement.

5. Device according to Claim 4, **characterized in that** the means (6) of translational movement is connected to one of the guides (52') of the movable longitudinal member (52) and may be produced in the form of a screw jack operated via a knurled knob (61).

6. Device according to Claim 4, **characterized in that** the means (6) of translational movement consists of an electromechanical device, such as a geared motor unit connected to a mechanical jack and which is controlled by a controller.

7. Device according to any one of Claims 2 to 4, **characterized in that** the angularly adjustable rolls (3 and 4) have the same inclination with respect to the direction of travel of the profile (100) or a different inclination on one side of the fixed mandrel (2) from the other, the said rolls (3 and 4) always being arranged in a staggered configuration.

8. Device according to any one of Claims 2 to 4 and 7, **characterized in that** the support frames (5) that support the angularly adjustable rolls (3, 4) are mounted on a vertical movement device (7) essentially comprising a chassis (8) on which the said frames (5) are mounted and a jack (9) for moving the said chassis (8) vertically on the chassis of the forming device (1), so that the rolls (3 and 4) can be pressed firmly against the profile (100) in the process of being formed against the fixed mandrel (2).

9. Device according to any one of Claims 2 to 4, 7 and 8, **characterized in that** the angularly adjustable rolls (3, 4) are each equipped with a drive motor.

10. Device according to any one of Claims 2 to 4 and 7 to 9, **characterized in that** it is equipped, on each side of the fixed mandrel (2), with several gangs of angularly and independently adjustable rolls (3 and 4).

11. Device according to any one of Claims 2 to 4 and 7 to 10, **characterized in that**, in the case of profiles that have more than two sides, it is provided, at least on the side that forms the web of the profile, with two rolls or two gangs of rolls each of which presses against one half of the said web.

12. Device according to any one of Claims 2 to 4 and 7 to 11, **characterized in that** in addition to the angularly adjustable rolls or gangs of rolls (3 and 4), it is provided with fixed rolls or gangs of rolls running perpendicular to the direction of travel of the profile (100) in the process of being formed.

13. Device according to any one of Claims 2 to 12, **characterized in that** it is further provided with means of detecting the border of the edges of the profiles and the position of the angle or angles thereof, these means being combined with a computerized instrumentation and control means that collaborates with devices that control the inclination of the angularly adjustable rolls (3 and 4).

## Patentansprüche

1. Verfahren zur Formung von Profilen, insbesondere von Winkelprofilen, aus flexiblen, streifenförmigen Materialien, insbesondere aus Papier, Karton, aus Verbundmaterialien oder dergleichen, **dadurch gekennzeichnet, dass** es im Wesentlichen, nach vorab durchgeführtem Abwickeln der Streifen aus flexiblem Material, die horizontal durch eine Vorrichtung zur Thermoversiegelung oder Verklebung geführt wurden, wobei wenigstens eine Seite der inneren Streifen und die Innenseite der Außenstreifen bestrichen wird, im Zusammenfügen dieser mit Klebstoff bestrichenen Streifen zu wenigstens einem Band und im Vorformen des erhaltenen Bands zu einem Profil-Rohling, in der Durchführung der Formung des Profils (100) auf wenigstens einem festen Dorn zur Formung (2) besteht, durch Anwendung unter Druck von jeder Seite des Winkelprofil-Rohlings auf die entsprechenden Seiten des festen Dorns zur Formung (2) mittels wenigstens einer winkelmäßig steuerbaren Rolle (3, 4), pro Dornseite.

2. Vorrichtung zur Formung (1) zum Durchführen des Verfahrens nach Anspruch 1, **dadurch gekennzeichnet, dass** sie aus wenigstens einem festen Dorn zur Formung (2) besteht, der durch jede seiner Seiten mit wenigstens einer winkelmäßig steuerbaren Rolle (3, 4) zusammenwirkt.

3. Vorrichtung nach Anspruch 2, **dadurch gekennzeichnet, dass** jede Seite des festen Dorns (2) mit wenigstens einem Zug von winkelmäßig steuerbaren Rollen (3, 4) zusammenwirkt.

4. Vorrichtung nach Anspruch 3, **dadurch gekennzeichnet, dass** die steuerbaren Rollen (3, 4) eines Rollenzuges auf einem entsprechenden Rahmen (5) montiert sind, wobei einer von dessen Trägern (51) fest ist und als Unterstützung zum Schwenken an den Achsen an einem der Enden der Achsen der Rollen (3, 4) dient, wobei der andere Träger beweglich ist (52) und als Gelenkunterstützung am anderen Ende der Achsen der Rollen (3, 4) dient und verschiebbar bezüglich dem ersten Träger (51) angebracht ist, indem er nahe seiner Enden geführt wird mittels krummliniger Rillen (53), die mit Führungen (52') zusammenwirken, wobei die Rillen in Endplatten (54) vorgesehen sind, die die Querträger des Rahmens (5) bilden und der Träger (52) mit einem Mittel zur Verschiebung in Translation (6) verbunden ist.

5. Vorrichtung nach Anspruch 4, **dadurch gekennzeichnet, dass** das Mittel zur Verschiebung in Translation (6) mit einer der Führungen (52') des beweglichen Trägers (52) verbunden ist und in Form einer Schraubenwinde mit Wirkung mittels eines Rändelknopfs (61) ausgebildet sein kann.

6. Vorrichtung nach Anspruch 4, **dadurch gekennzeichnet, dass** das Mittel zur Verschiebung in Translation (6) durch eine elektro-mechanische Vorrichtung, wie ein Getriebemotor gebildet ist, der mit einer mechanischen Winde verbunden ist und dessen Steuerung durch einen Automaten erfolgt.

7. Vorrichtung nach einem der Ansprüche 2 bis 4, **dadurch gekennzeichnet, dass** die winkelmäßig steuerbaren Rollen (3 und 4) eine Neigung aufweisen, die identisch ist bezüglich der Bewegungsrichtung des Profils (100) oder eine unterschiedliche Neigung von einer Seite des festen Dorns (2) zur anderen aufweisen, wobei die Rollen (3 und 4) immer versetzt angeordnet sind.

8. Vorrichtung nach einem der Ansprüche 2 bis 4 und 7, **dadurch gekennzeichnet, dass** die Rahmen (5) zur Unterstützung der winkelmäßig steuerbaren Rollen (3, 4) auf einer Vorrichtung zur vertikalen Verschiebung (7) angeordnet sind, die im Wesentlichen ein Gestell (8) zur Montage der Rahmen (5) und eine Winde (9) zur vertikalen Verschiebung des Gestells (8) auf dem Gestell der Vorrichtung zur Formung (1) aufweist, hinsichtlich der Anwendung der Rollen (3 und 4) auf das zu formende Profil (100), gegen den festen Dorn (2).

9. Vorrichtung nach einem der Ansprüche 2 bis 4 und 7 und 8, **dadurch gekennzeichnet, dass** die winkelmäßig steuerbaren Rollen (3, 4) jeweils mit einem Antriebsmotor ausgestattet sind.

10. Vorrichtung nach einem der Ansprüche 2 bis 4 und 7 bis 9, **dadurch gekennzeichnet, dass** sie, auf jeder Seite des festen Dorns (2), mit mehreren winkelmäßig und unabhängig steuerbaren Rollenzügen (3 und 4) ausgestattet ist.

11. Vorrichtung nach einem der Ansprüche 2 bis 4 und 7 bis 10, **dadurch gekennzeichnet, dass**, im Falle von Winkelprofilen mit mehr als zwei Seiten, wenigstens auf der Seite, die den Kern des Winkelprofils bildet, zwei Rollen oder zwei Rollenzüge, die jeweils auf eine Hälfte des Kerns Druck ausüben, vorgesehen sind.

12. Vorrichtung nach einem der Ansprüche 2 bis 4 und 7 bis 11, **dadurch gekennzeichnet, dass** außer den winkelmäßig steuerbaren Rollen oder den Rollenzügen (3 und 4), feste Rollen oder Rollenzüge vorgesehen sind, die sich senkrecht zur Abspulrichtung des zu formenden Profils (100) erstrecken.

13. Vorrichtung nach einem der Ansprüche 2 bis 12, **dadurch gekennzeichnet, dass** außerdem Mittel zur Erfassung der Kante der Ränder der Profile sowie der Position des oder seiner Winkel vorgesehen sind, wobei diese Mittel mit einem Datenverarbeitungsmittel zur Kontrolle und Steuerung kombiniert sind, die mit Vorrichtungen zur Steuerung der Neigung der winkelmäßig steuerbaren Rollen (3 und 4) zusammenwirken.
